# EUROPEAN PATENT APPLICATION

(11) **EP 3 354 863 A2**
(43) Date of publication of application: **01.08.2018**
(21) Application number: 18152525.4
(22) Date of filing: 19.01.2018
(51) Int. Cl.: F01D 25/04

(54) **GAS TURBINE ENGINE CASE MOUNT WITH VIBRATION DAMPING**

(30) Priority: 26.01.2017 US 201715416556
(71) Applicant: United Technologies Corporation, Farmington, CT 06032 (US)
(72) Inventor: BINSBERGER, Dale R., Stafford Springs, CT Connecticut 06076 (US)
(74) Representative: Dehns

(57) **Abstract**

The present invention is related to an assembly (46) for a gas turbine engine for providing vibration damping between a component and a mount. This assembly (46) includes a mount (50), a component (48) and a fastener assembly (52) attaching the component (48) to the mount (50). The fastener assembly (52) includes a fastener (68), a bushing (70) and a damper (72). The fastener (68) extends axially along an axis through an aperture in the component (48) and into the mount (50). The bushing (70) extends axially along the axis through the aperture and axially engages the mount (50) and the fastener (68). The damper (72) is configured to damp vibration transmission between the mount (50) and the component (48). The damper (72) is arranged between the mount (50) and the component (48) and between the component (48) and the bushing (70). This assembly improves attachment of composites and metals.

## Description

### BACKGROUND OF THE INVENTION

### 1. Technical Field

This disclosure relates generally to a gas turbine engine and, more particularly, to mounting components to a case of a gas turbine engine.

### 2. Background Information

Various systems and devices for mounting electronics as well as other devices to a case of a gas turbine engine are known in the art. While these systems and devices have various advantages, there is still room in the art for improvement. For example, there is a need in the art to provide vibration damping between a composite case structure and a metal mounting plate as well as accommodate misalignment between mounts on the composite case and mounting holes in the mounting plate.

### SUMMARY OF THE DISCLOSURE

According to an aspect of the present disclosure, an assembly is provided for a gas turbine engine. This gas turbine engine assembly includes a mount, a component and a fastener assembly attaching the component to the mount. The fastener assembly includes a fastener, a bushing and a damper. The fastener extends axially along an axis through an aperture in the component and into the mount. The bushing extends axially along the axis through the aperture and axially engages the mount and the fastener. The damper is configured to damp vibration transmission between the mount and the component. The damper is arranged between the mount and the component and between the component and the bushing.

According to another aspect of the present disclosure, another assembly is provided for a gas turbine engine. This gas turbine engine assembly includes an engine case, a mounting boss, a mounting tray, electronics and a fastener assembly. The engine case is configured from and/or otherwise includes fiber-reinforced composite material. The mounting boss is connected to the engine case. The mounting boss includes composite material and a threaded insert. The electronics are attached to the mounting tray. The fastener assembly attaches the mounting tray to the mounting boss. The fastener assembly includes a fastener, a flanged bushing, a first annular isolator and a second annular isolator. The fastener extends axially along an axis through an aperture in the mounting tray and is mated with the threaded insert. The flanged bushing extends axially along the axis through the aperture and axially engages the mounting boss and the fastener. The first annular isolator is configured axially between the mounting boss and the mounting tray. The second annular isolator is configured axially between the mounting tray and the flanged bushing.

The mount may be configured from and/or otherwise include non-metal composite material.

The mount may be configured as and/or otherwise include a mounting boss.

An engine case may be included. The mount may be affixed to the engine case. The mount and the engine case may each be configured from and/or otherwise include composite material.

The component may be configured as and/or otherwise include a metal mounting tray.

The mount may include a threaded insert. The fastener may be threaded into the threaded insert.

The fastener may be configured as and/or otherwise include a bolt.

The bushing may be configured from and/or otherwise include metal.

The bushing may include an annular flange and a tubular base that projects axially out from the annular flange and extends axially through the aperture. The annular flange may axially engage the fastener. The tubular base may axially engage the mount.

The aperture may have an aperture diameter. The tubular base may have a base diameter that is less than the aperture diameter.

The tubular base may have an axial base length. The damper may have an axial damper length. The axial damper length may be greater than the axial base length when the damper is in a relaxed state, and the axial damper length may be approximately equal to the axial base length when the damper is in a compressed state.

The bushing may not contact the component.

The damper may be configured from and/or otherwise include polymer.

The damper may be configured as and/or otherwise include an annular isolator disposed axially between and axially engaging the mount and the component.

The annular isolator may be affixed to the component.

The damper may be configured as and/or otherwise include an annular isolator disposed axially between and axially engaging the component and the bushing.

The annular isolator may be affixed to the bushing.

The damper may include a second annular isolator disposed axially between and axially engaging the mount and the component.

A second fastener assembly may be included for attaching the component to the mount. The second fastener assembly may include a second fastener, a second bushing and a second damper configured to further damp vibration transmission between the mount and the component.

The foregoing features and the operation of the invention will become more apparent in light of the following description and the accompanying drawings.

### BRIEF DESCRIPTION OF THE DRAWINGS

FIG. 1 is a side cutaway illustration of a geared turbine engine.
FIG. 2 is a topside plan view illustration of an assembly for the turbine engine of FIG. 1.
FIG. 3 is a perspective illustration of a portion of the turbine engine assembly of FIG. 2.
FIG. 4 is a sectional illustration of another portion of the turbine engine assembly of FIG. 2.
FIG. 5 is a side sectional illustration of a flanged bushing.
FIG. 6 is a side sectional illustration of a damper that includes a pair of annular vibration isolators.
FIG. 7 is a perspective, exploded illustration of another portion of the turbine engine assembly of FIG. 2.
FIG. 8 is a sectional illustration of still another portion of the turbine engine assembly of FIG. 2.

### DETAILED DESCRIPTION OF THE DISCLOSURE

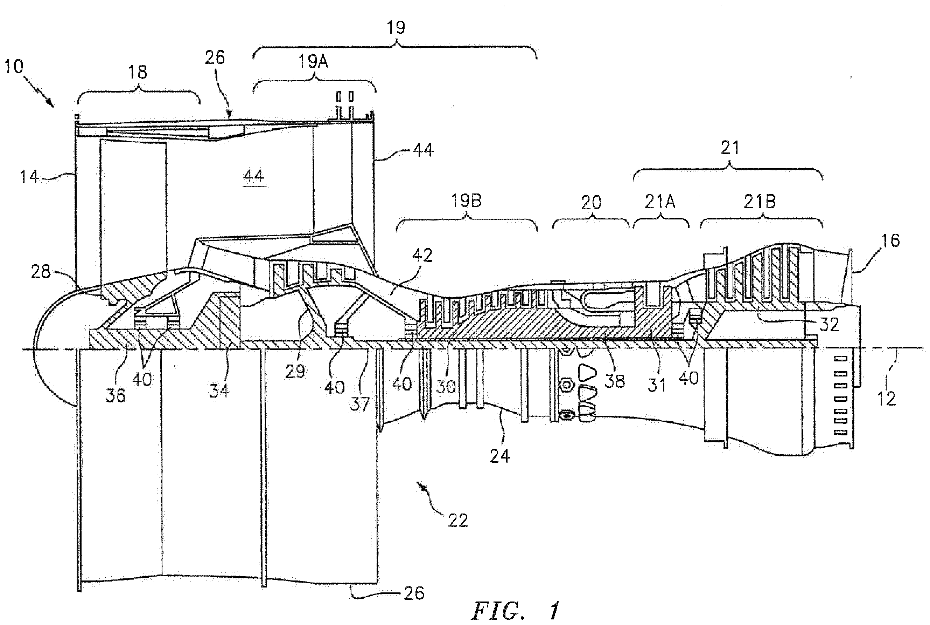

FIG. 1 is a side cutaway illustration of a geared turbine engine 10. This turbine engine 10 extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21A and a low pressure turbine (LPT) section 21B.

The engine sections 18-21 are arranged sequentially along the centerline 12 within an engine housing 22. This housing 22 includes an inner engine case 24 (e.g., a core case) and an outer engine case 26 (e.g., a fan case). The inner engine case 24 may house one or more of the engine sections 19-21; e.g., an engine core. The outer engine case 26 may house at least the fan section 18.

Each of the engine sections 18, 19A, 19B, 21A and 21B includes a respective rotor 28-32. Each of these rotors 28-32 includes a plurality of rotor blades arranged circumferentially around and connected to one or more respective rotor disks. An annular array of the rotor blades, for example, may be formed integral with or mechanically fastened, welded, brazed, adhered and/or otherwise attached to each respective rotor disk.

The fan rotor 28 is connected to a gear train 34, for example, through a fan shaft 36. The gear train 34 and the LPC rotor 29 are connected to and driven by the LPT rotor 32 through a low speed shaft 37. The HPC rotor 30 is connected to and driven by the HPT rotor 31 through a high speed shaft 38. The shafts 36-38 are rotatably supported by a plurality of bearings 40. Each of these bearings 40 is connected to the engine housing 22 by at least one stationary structure such as, for example, an annular support strut.

During operation, air enters the gas turbine engine 10 through the airflow inlet 14. This air is directed through the fan section 18 and into an annular core gas path 42 and an annular bypass gas path 44. The core gas path 42 extends sequentially through the engine sections 19-21. The air within the core gas path 42 may be referred to as "core air". The air within the bypass gas path 44 may be referred to as "bypass air". This air is referred to as "bypass air" since the bypass gas path 44 extends outside of and thereby bypasses the engine core.

The core air is compressed by the compressor rotors 29 and 30 and directed into a combustion chamber of a combustor in the combustor section 20. Fuel is injected into the combustion chamber and mixed with the compressed core air to provide a fuel-air mixture. This fuel air mixture is ignited and combustion products thereof flow through and sequentially cause the turbine rotors 31 and 32 to rotate. The rotation of the turbine rotors 31 and 32 respectively drive rotation of the compressor rotors 30 and 29 and, thus, compression of the air received from a core airflow inlet. The rotation of the turbine rotor 32 also drives rotation of the fan rotor 28, which propels the bypass air through and out of the bypass gas path 44. The propulsion of the bypass air may account for a majority of thrust generated by the turbine engine 10, e.g., more than seventy-five percent (75%) of engine thrust. The turbine engine 10 of the present disclosure, however, is not limited to the foregoing exemplary thrust ratio.

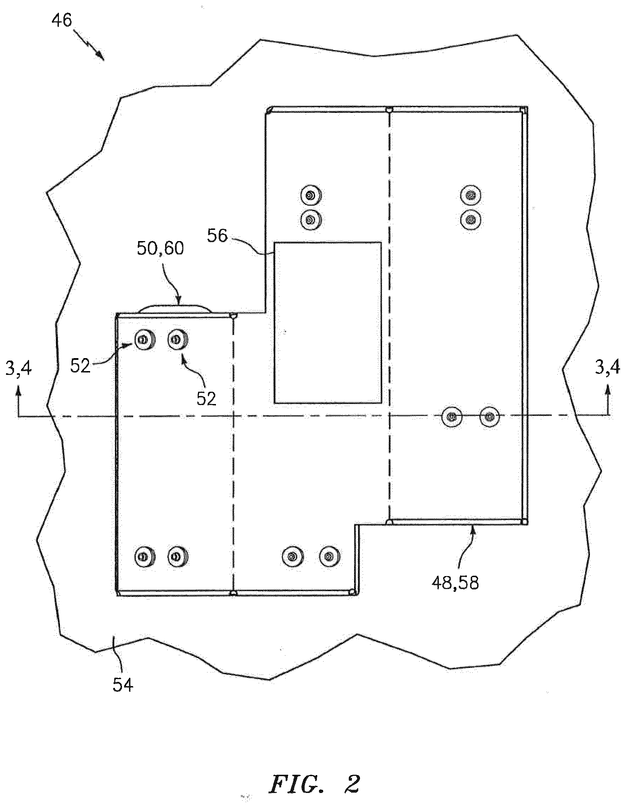

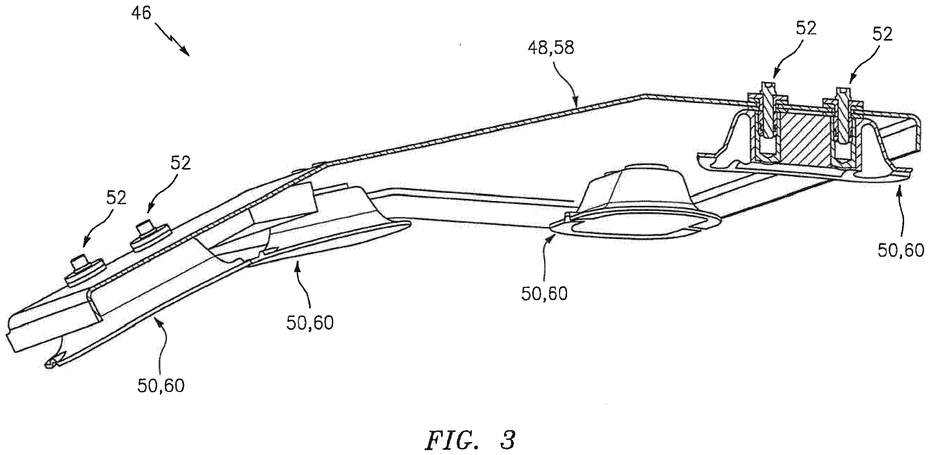

FIGS. 2-4 illustrate an assembly 46 for the gas turbine engine 10. This turbine engine assembly 46 includes a component 48, one or more mounts 50, and one or more fastener assemblies 52. The turbine engine assembly 46 may also include an engine case 54 (e.g., 24, 26; see FIG. 1) and electronics 56 (shown in block diagram form in FIG. 2), which may be configured as or otherwise include an engine controller. Examples of an engine controller include, but are not limited to, a full authority digital engine control ("FADEC"), an electronic engine controller ("EEC") and an engine control unit ("ECU").

The component 48 of FIGS. 2-4 is configured as a mounting tray 58 for the electronics 56. The mounting tray 58 may have a compound planar plate configuration as illustrated in FIGS. 2-4. For example, the mounting tray 58 may be manufactured from formed (e.g., bent, machined, etc.) sheet metal. Of course, the present disclosure is not limited to any particular mounting tray configuration, materials, or formation techniques. Furthermore, in other embodiments, the component 48 may alternatively be configured as a portion of another component such as, but not limited to, a portion of a housing for the electronics 56, or any other device to be mounted to the engine case 54.

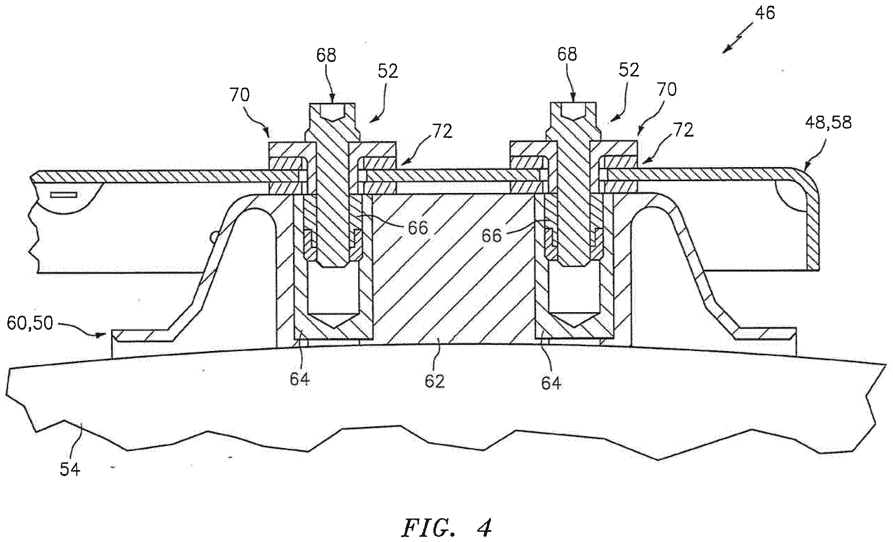

Referring to FIG. 4, each of the mounts 50 is formed integral with, bonded to and/or otherwise connected to the engine case 54. Each of the mounts 50 may be configured as a mounting boss 60. The mounting boss 60 of FIG. 4 includes a boss base / body 62 and one or more inserts 64 and 66. The boss base 62 may be configured from non-metal composite material. For example, the boss base 62 may be made from molded and/or otherwise formed fiber-reinforced composite material such as fibrous material (e.g., fiberglass, carbon fiber, aramid fiber, etc.) embedded within a resin matrix (e.g., thermoset or thermoplastic epoxy). In the embodiment of FIG. 4, the boss base 62 is bonded to (or laid up integrally with) the engine case 54 thereby configuring at least the engine case 54 and the mounting bosses 60 into a monolithic body. In such embodiments, the engine case 54 may also be configured from non-metal fiber-reinforced composite material, which may be the same material as (or different from) the boss base material.

The boss base 62 is configured with one or more insert apertures. Each of the insert apertures receives a respective one of the first inserts 64; e.g., a tubular metal (e.g., steel) reinforcement insert. A bore of each of the first inserts 64 receives a respective one of the second inserts 66; e.g., a tubular metal (e.g., steel) threaded insert. Of course, in other embodiments, a single insert may be inserted into each insert aperture where that single insert replaces the respective first and second inserts 64 and 66.

Each fastener assembly 52 includes a fastener 68, a flanged bushing 70 and a damper 72. The fastener 68 may be configured as a threaded bolt as shown in FIG. 4. However, in other embodiments, the fastener 68 may be configured as a threaded stud with a nut, or any other suitable fastener capable of mating with (e.g., threading into) a respective one of the inserts in the mounting boss 60, or directly with a respective aperture in the mounting boss 60.

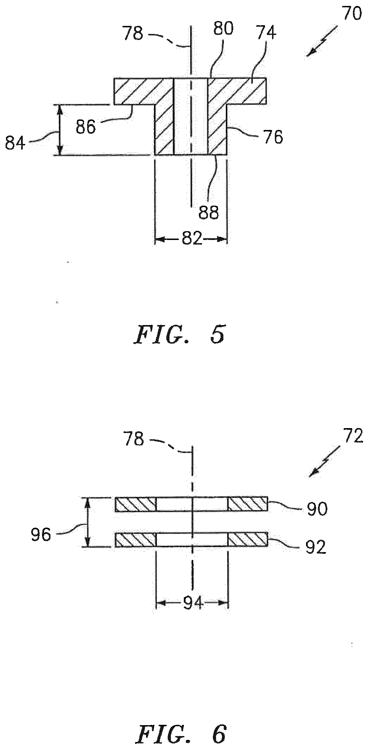

Referring to FIG. 5, the flanged bushing 70 includes an annular flange 74 and a tubular base 76. The tubular base 76 projects axially along an axis 78 out from the annular flange 74, which is positioned at (e.g., on, adjacent or proximate) an end 80 of the bushing 70. The tubular base 76 has an outer base diameter 82. The tubular base 76 has an axial base length 84 that extends from a contiguous surface 86 of the annular flange 74 to a distal end 88 of the tubular base 76, where the distal end 88 is axially opposite the end 80 along the axis 78. The flanged bushing 70 may be configured from a relatively high strength and/or incompressible material such as metal; however, the flanged bushing 70 is not limited to such an exemplary material.

Referring to FIG. 6, the damper 72 may include a set of annular isolators 90 and 92. An example of an annular isolator is a polymer (e.g., high temperature silicon, rubber, etc.) washer. Each of the annular isolators 90, 92 is configured with an inner bore having an inner damper diameter 94, which may be greater than (or the same as) the base diameter 82 (see FIG. 5). In combination, the isolators 90 and 92 provide the respective damper 72 (when in assembled position on opposing sides of the component 48; see FIG. 4) with an axial damper length 96; e.g., the sum of the thicknesses of the isolators 90 and 92 and the thickness of the component 48 along the axis 78. In a relaxed stated (e.g., before the fasteners 68 are torqued down), the damper length 96 may be sized greater than the base length 84. However, as described below in further detail, in a substantially completely assembled state (e.g., after the fasteners 68 are torqued down), the damper length 96 may be compressed to be approximately equal to the base length 84.

In the embodiment of FIG. 6, the annular isolators 90 and 92 are configured as discrete elements, which collectively form the damper 72. However, in other embodiments, it is contemplated the isolators 90 and 92 may be configured as portions of a single damper body. The present disclosure therefore is not limited to the exemplary configuration described above.

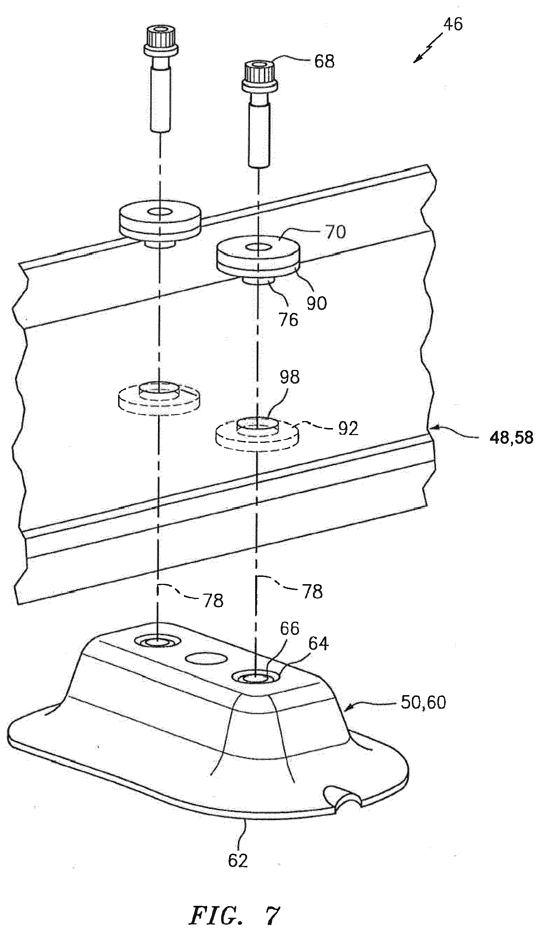

Referring to FIG. 7, to aid in the assembly process of the turbine engine assembly 46 as well as reduce assembly part count, each of the annular isolators 90 may be mated with a respective flanged bushing 70. For example, the tubular base 76 may project axially through the bore of the first isolator 90, where that bushing is axially abutted against the first isolator 90. Each first annular isolator 90 may also be bonded and/or otherwise attached to the flanged bushing 70. In addition or alternatively, each of the second annular isolators 92 (shown in ghosted fashion below the component 48) may be mated with the component 48 and (e.g., coaxially) aligned with a respective aperture 98 in the component 48. The second annular isolators 92 may also be bonded and/or otherwise attached to the flanged bushing 70.

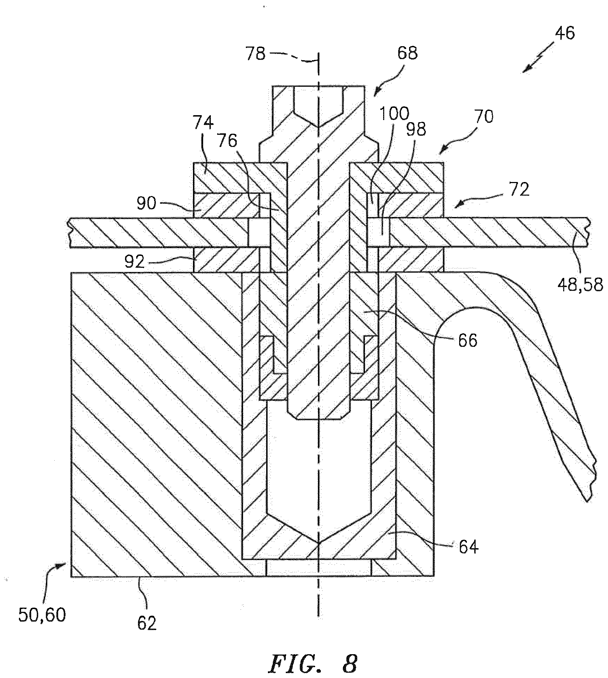

Referring now to FIG. 8, each of the second annular isolators 92 and a respective one of the apertures 98 in the component 48 is (e.g., approximately coaxially) aligned with a respective set of the inserts 64 and 66. Each of the second annular isolators 92 is positioned axially between and thereby axially engages (e.g., contacts) the component 48 and a respective one of the mounts 50.

Each of the flanged bushings 70 is mated with a respective one of the apertures 98 in the component 48. In particular, the tubular base 76 is positioned to axially project through the respective aperture 98 and axially engage (e.g., contact) a respective one of the mounts 50 and, more particularly, a respective one or set of the inserts 66. Each of the second annular isolators 92 is positioned axially between and thereby axially engages (e.g., contacts) the component 48 and a respective one of the flanged bushings 70.

The base diameter 82 (see FIG. 5) may be sized smaller than a diameter of the aperture 98. This enables the axis of the aperture 98 to be slightly offset (misaligned) from the axis of the insert 66. This may be particularly useful where the mount bases 62 and the engine case 54 are configured from composite material, since typical composite material formation techniques have lower (less precise) tolerances than typical metal forming techniques used for forming similar devices. In addition, the smaller diameter may facilitate forming an annular gap 100 between the flanged bushing 70 and the component 48 such that the flanged bushing 70 only engages the component 48 through the damper 72.

Each of the fasteners 68 projects axially through a respective one of the flanged bushings 70, dampers 72 and apertures 98, and is mated with (e.g., threaded into) a respective one of the second inserts 66. When the fasteners 68 are first mated with the inserts 66, an axial gap may extend between the distal ends 88 (see FIG. 5) of the bushings 70 and the inserts 64 and 66. However, as the fasteners 68 are further tightened (torqued), the dampers 72 may axially compress to a point where the flanged bushings 70 axially engage (e.g., contact) the inserts 64 and/or 66. This axial engagement may serve to provide a firm connection between the component 48 and the engine case 54 as well as provide the dampers 72 and their isolators 90 and 92 with a predetermined preload.

With the configuration of FIG. 8, the dampers 72 and their isolators 90 and 92 are operable to damp vibration transmission between the mounts 50 and the component 48. More particularly, under ideal conditions, the only vibration transmission path between the mounts 50 and the component 48 is through the dampers 72.

In some embodiments, one or more non-electronic devices may also or alternatively be mounted onto the component 48; e.g., the mounting tray 58. The present disclosure therefore is not limited to the mounting of electronic equipment.

In some embodiments, at least one additional element may be positioned between the isolator 90, 92 and an adjacent element. An example of such an additional element is an additional isolator and a metal washer.

The turbine engine assembly 46 may be included in various turbine engines other than the one described above. The turbine engine assembly 46, for example, may be included in a geared turbine engine where a gear train connects one or more shafts to one or more rotors in a fan section, a compressor section and/or any other engine section. Alternatively, the turbine engine assembly 46 may be included in a turbine engine configured without a gear train. The turbine engine assembly 46 may be included in a geared or non-geared turbine engine configured with a single spool, with two spools (e.g., see FIG. 1), or with more than two spools. The turbine engine may be configured as a turbofan engine, a turbojet engine, a propfan engine, a pusher fan engine or any other type of turbine engine. The present invention therefore is not limited to any particular types or configurations of turbine engines.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly (46) for a gas turbine engine (10), comprising:
a mount (50);
a component (48); and
a fastener assembly (52) attaching the component (48) to the mount (50), the fastener assembly (52) comprising a fastener (68), a bushing (70) and a damper (72);
the fastener (68) extending axially along an axis (78) through an aperture (98) in the component (48) and into the mount (50);
the bushing (70) extending axially along the axis (78) through the aperture (98) and axially engaging the mount (50) and the fastener (68); and
the damper (72) configured to damp vibration transmission between the mount (50) and the component (48), and the damper (72) arranged between the mount (50) and the component (48) and between the component (48) and the bushing (70).

2. The assembly of claim 1, wherein the mount (50) comprises non-metal composite material.

3. The assembly of claim 1 or 2, wherein the mount (50) comprises a mounting boss (60).

4. The assembly of any preceding claim, further comprising an engine case (54), wherein the mount (50) is affixed to the engine case (54), and wherein the mount (50) and the engine case (54) each comprises composite material.

5. The assembly of any preceding claim, wherein the component (48) comprises a metal mounting tray (58).

6. The assembly of any preceding claim, wherein
the mount (50) comprises a threaded insert (66); and
the fastener (68) is threaded into the threaded insert (66).

7. The assembly of any preceding claim, wherein the fastener (68) comprises a bolt (68).

8. The assembly of any preceding claim, wherein the bushing (70) comprises metal, and/or the damper (72) comprises polymer.

9. The assembly of any preceding claim, wherein
the bushing (70) includes an annular flange (74) and a tubular base (76) that projects axially out from the annular flange (74) and extends axially through the aperture (98);
the annular flange (74) axially engages the fastener (68); and
the tubular base (76) axially engages the mount (50);
wherein, optionally, the aperture (98) has an aperture diameter and the tubular base (76) has a base diameter (82) that is less than the aperture diameter.

10. The assembly of claim 9, wherein
the tubular base (76) has an axial base length (84);
the damper (72) has an axial damper length (96); and
the axial damper length (96) is greater than the axial base length (84) when the damper (72) is in a relaxed state, and the axial damper length (96) is approximately equal to the axial base length (84) when the damper (72) is in a compressed state.

11. The assembly of any preceding claim, wherein the bushing (70) does not contact the component (48).

12. The assembly of any preceding claim, wherein the damper (72) comprises a first annular isolator (90) disposed axially between and axially engaging the component (48) and the bushing (70), wherein, optionally, the first annular isolator (90) is affixed to the bushing (70).

13. The assembly of any preceding claim, wherein the damper (72) comprises a second annular isolator (92) disposed axially between and axially engaging the mount (50) and the component (48), wherein, optionally, the second annular isolator (92) is affixed to the component (48).

14. The assembly of any preceding claim, further comprising a second fastener assembly (52) attaching the component (48) to the mount (50), the second fastener assembly (52) comprising a second fastener (68), a second bushing (70) and a second damper (72) configured to further damp vibration transmission between the mount (50) and the component (48).

15. An assembly (46) for a gas turbine engine (10), comprising:
an engine case (54) comprising fiber-reinforced composite material;
a mounting boss (60) connected to the engine case (54), the mounting boss (60) comprising composite material and a threaded insert (66);
a mounting tray (58);
electronics (56) attached to the mounting tray (58); and
a fastener assembly (52) attaching the mounting tray (58) to the mounting boss (60), the fastener assembly (52) comprising a fastener (68), a flanged bushing (70), a first annular isolator (90) and a second annular isolator (92);
the fastener (68) extending axially along an axis (78) through an aperture (98) in the mounting tray (58) and mated with the threaded insert (66);
the flanged bushing (70) extending axially along the axis (78) through the aperture (98) and axially engaging the mounting boss (60) and the fastener (68);
the second annular isolator (92) configured axially between the mounting boss (60) and the mounting tray (58); and
the first annular isolator (90) configured axially between the mounting tray (58) and the flanged bushing (70).
